# EUROPÄISCHE PATENTSCHRIFT

(11) **EP 0 934 945 B1**
(45) Veröffentlichungstag und Bekanntmachung des Hinweises auf die Patenterteilung: **22.10.2003**
(21) Anmeldenummer: 99100230.4
(22) Anmeldetag: 08.01.1999
(51) Int. Cl.: C07F 7/04

(54) **Kontinuierliches Verfahren zur Herstellung von chlorfreien Tetraalkoxysilanen**
Continuous process for the preparation of tetraalkoxysilanes free of chlorine
Procédé continu pour la préparation de tetraalkoxysilanes exempts de chlore

(30) Priorität: 06.02.1998 DE 19804731
(43) Veröffentlichungstag der Anmeldung: 11.08.1999
(73) Patentinhaber: Degussa AG, 40474 Düsseldorf (DE)
(72) Erfinder: Dittrich, Uwe, Dr., 01445 Radebeul (DE); Müller, Reinhard, 01612 Nünchritz (DE); Steding, Frank, Dr., 45768 Marl (DE)

(56) Entgegenhaltungen:
- EP-A- 0 127 951
- EP-A- 0 225 137
- US-A- 4 224 234
- US-A- 4 288 604

## Beschreibung

Die Erfindung betrifft ein kontinuierliches Verfahren zur Herstellung von chlorfreien Tetraalkoxysilanen aus metallischem Siliziumpulver und Alkohol in Gegenwart eines basischen Katalysators mit verbesserter Selektivität und verbesserter Raum-Zeit-Ausbeute, wobei ein flüssiges Katalysatorgemisch eingesetzt wird.

Verfahren zur kontinuierlichen Herstellung von Tetraalkoxysilanen sind bekannt. Industriell werden im wesentlichen zwei Methoden genutzt. Tetraalkoxysilan kann entweder durch direkte Umsetzung von metallischem Siliziumpulver mit Alkohol oder durch Verestern von Tetrachlorsilan mit Alkohol hergestellt werden.

Die Herstellung von Tetraalkoxysilanen aus Tetrachlorsilan durch Veresterung mit Alkohol ist in einfachen Reaktoren unter Normaldruck und ohne Energiezuführung möglich. Das entstehende Estergemisch muß jedoch destilliert werden, um insbesondere Chlor enthaltende Verunreinigungen, wie Chlorester und gelösten Chlorwasserstoff abzutrennen. Bei sehr niedrigen Chlorwerten im Tetraalkoxysilan ist der Destillationsaufwand sehr hoch. Beispielsweise werden Kolonnen mit hoher Bodenzahl als Gegenstromdestillation mit Alkohol betrieben. Das dennoch verbleibende Restchlor im Tetraalkoxysilan wird in einer weiteren Reaktionsstufe neutralisiert. Das entstehende Salz muß abgetrennt und entsorgt, das Tetralkoxysilan nochmals destillativ gereinigt werden. Bei der Veresterung von Tetrachlorsilan mit Alkohol wird gasförmiger Chlorwasserstoff frei, der aufwendig gereinigt werden muß, um verwertet werden zu können. Dieses Verfahren benötigt grundsätzlich zwei Reaktionsstufen zur Umsetzung des Siliziums zu Tetraalkoxysilan, die Chlorsilansynthese und die Chlorsilanveresterung. Für ein effizienteres Verfahren ist ein Verfahren mit einer Reaktionsstufe nötig.

Ein Verfahren zur Herstellung von Alkoxysilanen mit einer Reaktionsstufe ist die direkte Synthese von Silizium und Alkohol. In US 5,084,590 ist diese direkte Synthese in Gegenwart eines Kupferkatalysators beschrieben. Vorzugsweise wird jedoch Trialkoxysilan gebildet. Ist Tetraalkoxysilan das Ziel der direkten Synthese, kann trotz Optimierung der Reaktionsbedingungen die Bildung von Si-H-Verbindungen und damit von Trialkoxysilan nicht vermieden werden, was zu deutlichen Ausbeuteverlusten führt. Weiterhin ist die Aufarbeitung der kupferhaltigen Reststoffe so aufwendig, daß die kupferkatalysierte Synthese nicht für ein effizientes Verfahren zur Herstellung von Tetraalkoxysilanen geeignet ist.

Ein katalytisches Verfahren zur Herstellung von Tetraalkoxysilan aus Silizium und Alkohol ohne den Einsatz von Schwermetallen, wie Kupfer, ist in DE 28 16 386 beschrieben. Als Katalysatoren werden neben Alkalialkoholat Ätheralkohole und Alkanolamine eingesetzt. Dieses Verfahren wird bevorzugt in einem Rührgefäß durchgeführt und ist bei einer Esterausbeute von maximal 90 Gew.-%, bezüglich des eingesetzten Siliziums, nicht für ein effizientes, kontinuierliches Verfahren geeignet. Die Nebenreaktion des Wasserstoffs mit Alkohol zu Wasser und Alkanen erfordert eine aufwendige Schleppmitteldestillation, um das Wasser zu entfernen. Wasser desaktiviert den Katalysator und führt weiterhin zur unerwünschten Oligomerisierung des Tetraalkoxysilans.

US 4,288,604 beinhaltet die direkte Umsetzung von Silizium mit Alkohol zu Tetraalkoxysilan in Gegenwart von basischem Katalysator. Beschrieben ist ein diskontinuierliches Verfahren. Für die Durchführung dieses Verfahrens ist der Einsatz von unter Stickstoffatmosphäre gemahlenem Silizium unumgänglich. Auf diese Weise wird ein Blockieren der Siliziumoberfläche mit Sauerstoff vermieden. Weiterhin wird inertes, hochsiedendes Lösungsmittel verwendet, um die Reaktion starten zu können. Der Einsatz von Hydroxydscavengern ist notwendig, um sich bildende oder eingeschleppte Hydroxylgruppen unwirksam zu machen.
Für ein kontinuierliches Verfahren, das eine praktisch vollständige Umsetzung von Silizium und Ethanol ermöglicht, ist das beschriebene Verfahren trotz Einsatz erheblicher Mengen an inertem Lösungsmittel, Hydroxydscavengern und Alkalialkolat als Katalysator wenig geeignet.

EP 0 225 137 A2 offenbart ein Verfahren zur Herstellung von Tetraalkoxysilan durch direkte Umsetzung von Siliciumpulver und Methanol in Gegenwart eines Katalysators in einem Reaktor, wobei als Katalysator ein Alkalialkoxid und ein Zusatz eines linearen Ethers verwendet wird. Das Verfahren wird bei 120 bis 155°C betrieben. Dabei werden unter Rühren und Erwärmen des Reaktionsgemischs Silicium und Methanol kontinuierlich nachgeführt und Produkt aus dem Reaktor destilliert.

Aus EP 0 127 951 A1 ist ein Verfahren zur Herstellung von Tetraalkoxysilan zu entnehmen, wobei man Tetraethoxysilan, Siliciumpulver und Natrium-2-metlioxyethanolat oder Natrium-2-butoxyethanolat als Katalystor in einem Reaktor vorgelegt, unter Rühren und Erwärmen Ethanol dosiert und im Laufe von 18 Stunden Produkt aus dem Batchansatz destilliert. Die Betriebstemperatur liegt hier im Bereich von 130 bis 180°C.

Der Erfindung lag die Aufgabe zugrunde, ein weiteres kontinuierliches Verfahren zur Herstellung von chlorfreien Tetraalkoxysilanen zu entwickeln, das die direkte Umsetzung von metallischem Siliziumpulver mit Alkohol ermöglicht.

Gegenstand der Erfindung ist ein kontinuierliches Verfahren zur Herstellung von chlorfreien Tetraalkoxysilanen der allgemeinen Formel (I)

(R¹O)₄Si. (I),

wobei R¹ unabhängig voneinander unverzweigte, verzweigte und/oder cyclische Kohlenwasserstoffreste mit 1 bis 6 Kohlenstoffatomen bedeuten, durch Umsetzung von metallischem Siliziumpulver mit einem einwertigen Alkohol in Gegenwart eines basischen Katalysators, in welchem der Katalysator, der ein Gemisch aus
(a) mindestens einer Verbindung der allgemeinen Formel (II)

   [R²O - (R³O)ₘ]ₙ Si [O R¹]₄₋ₙ (II),
(b) mindestens einer Verbindung der allgemeinen Formel (III)

   R²O - (R³O)ₘ - M (III)

   und
(c) mindestens einer Verbindung der allgemeinen Formel (IV)

   R²O - (R³O)ₘ - H (IV),

   worin R¹ die oben angegebene Bedeutung aufweist, R2 unabhängig voneinander Kohlenwasserstoffreste mit 1 bis 10 Kohlenstoffatomen oder Wasserstoff, R³ unabhängig voneinander Kohlenwasserstoffreste mit 1 bis 4 Kohlenstoffatomen sowie M ein Alkalimetall, ausgewählt aus Lithium, Natrium oder Kalium, bedeuten und m einen Wert zwischen 0 und 20 sowie n einen Wert zwischen 0 und 4 annehmen, darstellt,
   in einer kontinuierlich betriebenen Reaktionsstufe vorgelegt, dann bei erhöhter Temperatur kontinuierlich metallisches Siliciumpulver und Alkohol zudosiert, anschließend das Reaktionsgemisch in einer ersten Kolonne getrennt, wobei gasförmiger Wasserstoff über Kopf abgeführt, hochsiedender Katalysator in das Reaktionsgemisch zurückgeführt und niedrigsiedene Anteile einer zweiten Kolonne zugeführt werden, in welcher die Tetraalkoxysilane der allgemeinen Formel (I) abgetrennt und anfallender niedrigsiedener Alkohol in die Reaktion zurückgeführt werden.

Das Siliziumpulver kann beispielsweise mit Eisen und anderen Metallen verunreinigt sein. Metallisches Siliziumpulver mit einem Anteil von 10 Gew.-% Eisen ist einsetzbar. Diese Verunreinigungen müssen aus dem kontinuierlich betriebenen Reaktor ausgeschleust werden, um den stationären Betrieb aufrecht zu erhalten. Die mit den Verunreinigungen ausgeschleuste Menge an reaktiven Anteilen wird nach deren Abtrennung in den Reaktor zurückgeführt. Zur Abtrennung der Verunreinigungen sind Filter oder Zentrifugen geeignet. Um große Raum-Zeit-Ausbeuten zu erreichen, ist der Einsatz von möglichst fein gemahlenem Silizium wünschenswert, beispielsweise von Silizium einer mittleren Teilchengröße kleiner 70 µm. Mittlere Teilchengrößen von 2 µm sind nach dem erfindungsgemäßen Verfahren problemlos verarbeitbar. Eine Vermahlung unter Ausschluß der Luft, beispielsweise unter Stickstoffatmosphäre, ist Verfahren nicht notwendig.

Als Alkohol kann kommerziell verfügbarer Alkohol, wie Methanol, Ethanol oder Propanol, verwendet werden. Bevorzugt ist wasserfreies Ethanol. Vor dem Eintritt in den Reaktor wird der Alkohol aufgeheizt und flüssig, siedend oder gasförmig in den kontinuierlich Reaktor eingespeist.

Die Herstellung des Katalysators ist der Umsetzung von Silicium mit Alkohol vorgeschaltet. Zur Herstellung des Katalysators wird ein Verhältnis der eingesetzten Verbindungen von 2 bis 3 mol der Verbindung (IV) zu 1 bis 2 mol der Verbindung (V) zu 1 mol der Verbindung (I) eingesetzt. Als Alkalialkolat (Verbindung der allgemeinen Formel (V)) und Tetraalkoxysilan (Verbindung der allgemeinen Formel (I)) werden vorzugsweise die Verbindungen eingesetzt, die die gleiche Alkoxygruppen wie das Zielprodukt des Verfahrens beinhalten und aus der Gruppe Methoxygruppe, Ethoxygruppe und Propoxygruppe ausgewählt sind. Das Alkalialkoholat der allgemeinen Formel (V) kann pulverförmig oder in Alkohol gelöst eingesetzt werden. Das Alkalimetall kann Lithium, Natrium oder Kalium sein. Der eingesetzte Polyetheralkohol (Verbindung der allgemeinen Formel (IV)) wird bevorzugt aus der Gruppe der substituierten und/oder unsubstituierten Polyethylenglykole ausgewählt. Besonders bevorzugt ist Butyldiethylenglycol. Als Ausgangsstoffkombination ist besonders die Kombination von Natriumethanolat, Tetraethoxysilan und Butyldiethylenglykol bevorzugt.

Für die Katalysatorherstellung wird ein Mischreaktor benutzt, der üblicherweise vor dem Vorlegen der verwendeten Verbindungen inertisiert wird. Der Reaktorinhalt wird unter Rühren bevorzugt auf über 120 °C erwärmt und ggf. Alkohol abdestilliert. Die Reaktionszeit ist größer als eine Stunde. Bevorzugt wird eine Reaktionszeit von 2 bis 3 Stunden bei einer Reaktionstemperatur von 140 °C bis 160 °C. Danach wird der gebildete Alkohol ganz oder teilweise abdestilliert und der Katalysator kann zwischengelagert oder direkt in den Reaktor zur kontinuierlichen Umsetzung von metallischem Siliziumpulver und Alkohol vorgelegt werden.

In der kontinuierlich betriebenen Verfahrensstufe werden feingemahlenes Silizium und Alkohol in Gegenwart des wie beschrieben hergestellten Katalysators umgesetzt. Als Reaktoren werden 3-Phasen-Mischreaktoren, ein- oder mehrstufig, eingesetzt. Besonders bevorzugt ist ein einstufiger Mischreaktor, in dem gerührt werden kann und/oder in dem durch den sich bildenden Wasserstoff sowie siedende Reaktanten Mischenergie eingetragen wird. Die eingetragene Mischenergie sorgt für die gleichmäßige Verteilung der unterschiedlich großen Siliziumteilchen.

In dem Reaktor werden 30 Gew.-% bis 95 Gew.-%, bevorzugt 65 Gew.-% bis 75 Gew.-% Katalysatorgemisch und 5 Gew.-% bis 70 Gew.-%, bevorzugt 25 Gew.-% bis 35 Gew.-% Siliziumpulver, bezogen auf das Reaktionsgemisch, vorgelegt. Ist der vorgelegte Katalysator frei von Alkohol, wird üblicherweise vor Reaktionsstart Alkohol dosiert und damit ein Alkoholüberschuß für den Alkoholkreislauf vorgelegt. Der Reaktorinhalt wird auf Temperaturen im Bereich von 120 °C bis 250 °C, bevorzugt im Bereich von 190 °C bis 200 °C, aufgeheizt. Mit Beginn der Wasserstoffbildung, wird mit der Dosierung des gemahlenen Siliziums und des Alkohols begonnen.

Die erste Kolonne nach dem Reaktor trennt die flüchtigen Anteile des Katalysatorgemisches von den Reaktionsprodukten und dem Alkoholüberschuß. Die abgetrennten Katalysatoranteile werden in den Reaktor zurückgeführt. Je nach Bodenzahl wird diese Kolonne bei unterschiedlichen Rücklaufverhältnissen betrieben. Der Wasserstoff wird über den Kopfkondensator und ggf. weitere Reinigungsstufen abgegeben und das anfallende Alkohol/Tetraalkoxysilan-Gemisch in einer zweiten Kolonne kontinuierlich getrennt. Der abgetrennte Alkoholüberschuß wird in den Reaktor zurückgeführt und damit im Kreislauf gefahren.

Das flüssige Katalysatorgemisch ist unter den beschriebenen Bedingungen stabil. Ein Verbrauch an Katalysator wurde nicht festgestellt.

Mit dem erfindungsgemäßen Verfahren sind größer als 0,8 mol Si pro Stunde und Liter Reaktorinhalt, mindestens jedoch 0,3 mol / 1h, umsetzbar und eine Selektivität von 98% Tetraalkoxysilan bezüglich Silizium erreichbar.

Die erfindungsgemäß hergestellten Tetraalkoxysilane sind chlorfrei und daher für anspruchsvolle Anwendungen geeignet. Sie sind zur Herstellung von hochreinem Glas und Glasfasern sowie als Beschichtungsrohstoff für Halbleiterbauelemente verwendbar.

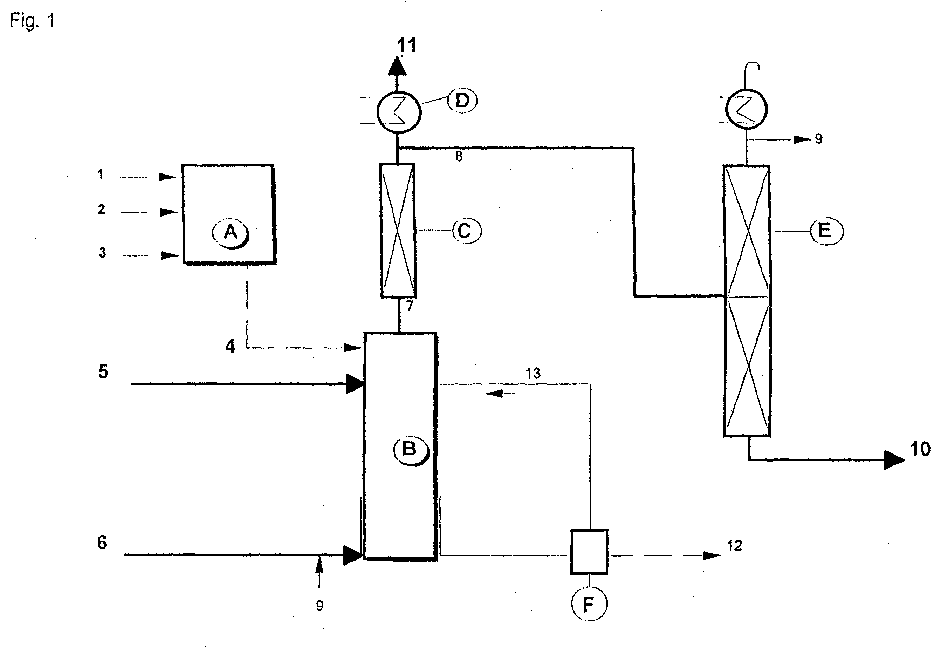

### Allgemeine Durchführung des Verfahrens (siehe Figur 1)

Im Reaktor A werden Alkalialkoholat (Strom 1), Polyetheralkohol (Strom 2) und Tetraalkoxysilan (Strom 3) vorgelegt. Unter Rühren und ggf. Abdestillieren von Alkohol wird das Reaktionsgemisch auf ca. 150 °C hochgeheizt. Weiterer Alkohol kann unter Vakuum abdestilliert werden. Nach einer Prozeßzeit von mindestens einer Stunde wird das Reaktionsgemisch auf kleiner 50 °C abgekühlt und kann unter Ausschluß von Luftfeuchtigkeit zwischengelagert oder direkt in den Reaktor B gegeben werden (Strom 4).

Im Reaktor B werden der Katalysator und gemahlenes Silizium vorgelegt. Ist der Katalysator alkoholfrei, wird der für den Alkoholkreislauf benötigte Alkoholüberschuß ebenfalls vorgelegt. Danach wird der Reaktorinhalt gerührt und auf eine Temperatur von 190 °C bis 210 °C aufgeheizt. Die Dosierung von Alkohol (Strom 6) und Silizium (Strom 5) beginnt, wenn der Reaktionsstart an der Wasserstoffbildung (Strom 11) erkennbar ist. Nachdem die erste Kolonne C mittels der anfallenden Brüden (Strom 7) aufgeheizt ist und unterhalb des Kopfkondensators D der Rücklauf so eingestellt wurde, daß die flüchtigen Katalysatoranteile (Strom 7) zurückgehalten werden, wird die Temperatur im Reaktor B konstant gehalten. Aus dem Reaktor B werden die Verunreinigungen des metallischen Siliziums (Strom 12) ausgeschleust, wobei die reaktiven Anteile (Strom 13) in den Reaktor zurückgeführt werden.

In die zweite Kolonne E wird das anfallende Alkohol/Tetraalkoxysilan-Gemisch (Strom 8) in Alkohol (Strom 9) und Tetraalkoxysilan (Strom 10) getrennt. Der anfallende Alkoholüberschuß (Strom 9) wird im Kreislauf zurück in den Reaktor B geführt.

### Ausführungsbeispiel :

Zur Herstellung des Katalysatorgemisches wird als Reaktor A ein beheizbarer Rührkessel mit 351 Inhalt benutzt. Vorgelegt werden 14,5 kg Butyldiethylenglykol, 3,2 kg pulverförmiges Natriumethylat und 9,6 kg 76 %-iges Tetraethoxysilan, gelöst in Ethanol (Ströme 1 bis 3), nach dem der Rührkessel mit Stickstoff inertisiert wurde. Der Kesselinhalt wird auf 150 °C erwärmt. Ab einer Kesseltemperatur von 118°C beginnt der Kesselinhalt durch enthaltenes und sich bildendes Ethanol zu sieden. 2 kg Ethanol werden bei einer Kopftemperatur von 78 °C unter Normaldruck abgenommen. Nach 2,5 h fällt kein Destillat mehr an und der Druck wird auf 500 hPa abgesenkt. Innerhalb 1 h werden 1 kg Ethanol abdestilliert, danach der Kessel mit Stickstoff belüftet.

Im Reaktor B, einer Blasensäule mit Rührer und 101 Reaktionsvolumen, werden 7 kg Katalysator (Strom 4) und 3 kg gemahlenes Silizium (Strom 5) mit einer durchschnittlichen Teilchengröße von d _{50%} = 27 µm vorgelegt. Bei 170°C startet die Reaktion. Danach beginnt die Dosierung von 3,5 mol/h Silizium und 34 mol/h Ethanol (Strom 6 und 9), das zu 20 mol/h aus Kreislaufethanol (Strom 9) besteht. Die Temperatur wird auf 190 °C bis 200 °C erhöht und konstant gehalten. Dabei fallen 3,5 mol/h Tetraethoxysilan (Strom 10) an, nachdem in der aufgesetzten Kolonne C hochsiedende Anteile (Strom 7) zurückgehalten und das Ethanol/Tetraethoxysilan-Gemisch (Strom 8) in einer Kolonne E getrennt wird. Das Ethanol (Strom 9) wird als Ethanolüberschuß in den Reaktor B dosiert. Am Boden des Reaktors werden die Verunreinigungen des Siliziumpulvers (Strom 12) entnommen, indem abgelassener Reaktorinhalt filtriert (Filter F) und die flüssigen Anteile (Strom 13) in den Reaktor zurückgeführt werden.

Die Reaktion wird so geführt, daß im stationären Zustand im Reaktor B ein Bereich für die Siliziumkonzentration von 25 Gew.-% bis Gew.- 35 % und 65 Gew.-% bis 75 Gew.-%, bezogen auf das Reaktionsgemisch, eingehalten werden. Im stationären Zustand wird eine Raum-Zeit-Ausbeute von 0,32 mol/1 h an Tetraethoxysilan bei einer Tetraethoxylan-Selektivität von 98 %, bezogen auf eingesetztes Silizium, erreicht.

### Bezugszeichenliste:

- 1: Alkalialkoholat Natriumethanolat
- 2: Polyetheralkohol Butyldiethylenglykol
- 3: Tetraalkoxysilan Tetraethoxysilan
- 4: Katalysator
- 5: gemahlenes Silizium
- 6: Alkohol Ethanol
- 7: Rücklauf Hochsieder
- 8: Alkohol/Tetraalkoxysilan-Gemisch
- 9: Alkoholüberschuß Ethanolüberschuß
- 10: Tetraalkoxysilan Tetraethoxysilan
- 11: Wasserstoff Eisen

## Patentansprüche

1. Kontinuierliches Verfahren zur Herstellung von chlorfreien Tetraalkoxysilanen der allgemeinen Formel (I)
(R¹O)₄Si (I),
wobei R¹ unabhängig voneinander unverzweigte, verzweigte und/oder cyclische Kohlenwasserstoffreste mit 1 bis 6 Kohlenstoffatomen bedeuten, durch Umsetzung von metallischem Siliziumpulver mit einem einwertigen Alkohol in Gegenwart eines basischen Katalysators, wobei der Katalysator, der ein Gemisch aus
(a) mindestens einer Verbindung der allgemeinen Formel (II)
[R²O - (R³O)ₘ]ₙ Si [O R¹]₄₋ₙ (II)
(b) mindestens einer Verbindung der allgemeinen Formel (III)
R²O - (R³O)ₘ - M (III)
und
(c) mindestens einer Verbindung der allgemeinen Formel (IV)
R²O - (R³O)ₘ - H (IV),
worin R¹ die oben angegebene Bedeutung aufweist, R² unabhängig voneinander Kohlenwasserstoffreste mit 1 bis 10 Kohlenstoffatomen oder Wasserstoff, R³ unabhängig voneinander Kohlenwasserstoffreste mit 1 bis 4 Kohlenstoffatomen sowie M ein Alkalimetall, ausgewählt aus Lithium, Natrium oder Kalium, bedeuten und m einen Wert zwischen 0 und 20 sowie n einen Wert zwischen 0 und 4 annehmen, darstellt,
in einer kontinuierlich betriebenen Reaktionsstufe vorgelegt, dann bei erhöhter Temperatur kontinuierlich metallisches Siliciumpulver und Alkohol zudosiert, anschließend das Reaktionsgemisch in einer ersten Kolonne getrennt, wobei gasförmiger Wasserstoff über Kopf abgeführt, hochsiedender Katalysator in das Reaktionsgemisch zurückgeführt und niedrigsiedende Anteile einer zweiten Kolonne zugeführt werden, in welcher die Tetraalkoxysilane der allgemeinen Formel (I) abgetrennt und anfallender niedrigsiedender Alkohol in die Reaktion zurückgeführt werden.

2. Verfahren nach Anspruch 1, **dadurch gekennzeichnet, daß** der Katalysator hergestellt wird durch Umsetzung von mindestens einem Tetraalkoxysilan der allgemeinen Formel (I)
(R¹O)₄Si (I),
mit mindestens einer Verbindung der allgemeinen Formel (IV)
R²O - (R³O)ₘ - H (IV)
und mit mindestens einer Verbindung der allgemeinen Formel (V)
R¹O M (V),
wobei R¹, R², R³, M und m die oben angegebene Bedeutung aufweisen.

3. Verfahren nach Anspruch 2, **dadurch gekennzeichnet, daß** der Rest R¹ ein Methyl-, Ethylund/oder Propylrest ist.

4. Verfahren nach Anspruch 2, **dadurch gekennzeichnet, daß** zur Herstellung des Katalysators als Verbindung der allgemeinen Formel (IV) ein substituiertes und/oder unsubstituiertes Oligound/oder Polyethylenglykol verwendet wird.

5. Verfahren nach Anspruch 2, **dadurch gekennzeichnet, daß** zur Herstellung des Katalysators das molare Verhältnis der eingesetzten Verbindungen 2 bis 3 mol der Verbindung (IV) zu 1 bis 2 mol der Verbindungen (V) zu 1 mol der Verbindung (I) beträgt.

6. Verfahren nach Anspruch 2, **dadurch gekennzeichnet, daß** die Herstellung des Katalysators bei Siedetemperatur und in einem Zeitraum von mindestens 60 min erfolgt.

7. Verfahren nach Anspruch 2, **dadurch gekennzeichnet, daß** sich während der Herstellung des Katalysators bildender Alkohol ganz oder teilweise entfernt wird.

8. Verfahren nach Anspruch 1, **dadurch gekennzeichnet, daß** zur Herstellung der Tetraalkoxysilane als Alkohol Methanol, Ethanol und/oder Propanol verwendet werden.

9. Verfahren nach Anspruch 1, **dadurch gekennzeichnet, daß** der Alkohol flüssig und/ oder gasförmig zudosiert wird.

10. Verfahren nach Anspruch 1, **dadurch gekennzeichnet, daß** feingemahlenes Silizium mit einer durchschnittlichen Korngröße kleiner 70 µm eingesetzt wird.

11. Verfahren nach Anspruch 1, **dadurch gekennzeichnet, daß** die kontinuierliche betriebene Reaktionsstufe in einem ein- oder mehrstufigen Mischreaktor durchgeführt wird.

12. Verfahren nach Anspruch 11, **dadurch gekennzeichnet, daß** als einstufiger Mischreaktor eine Blasensäule, die mit einem Rührer ausgestattet ist, verwendet wird.

13. Verfahren nach Anspruch 1, dadurch gekennzeichent, daß die kontinuierliche betriebene Reaktionsstufe im Temperaturbereich von 120 °C bis 250 °C betrieben wird.

14. Verfahren nach Anspruch 1, **dadurch gekennzeichnet, daß** in der kontinuierlich betriebenen Reaktionsstufe der Katalysator 30 Gew.-% bis 95 Gew.-%, bezogen auf das Reaktionsgemisch, enthalten ist.

15. Verfahren nach Anspruch 14, **dadurch gekennzeichnet, daß** in der kontinuierlich betriebenen Reaktionsstufe der Katalysator 65 Gew.-% bis 75 Gew.-%, bezogen auf das Reaktionsgemisch, enthalten ist.

16. Verfahren nach Anspruch 1, **dadurch gekennzeichnet, daß** in der kontinuierlich betriebenen Reaktionsstufe metallisches Siliziumpulver zu 5 Gew.-% bis 70 Gew.-%, bezogen auf das Reaktionsgemisch, enthalten ist.

17. Verfahren nach Anspruch 16, **dadurch gekennzeichnet, daß** in der kontinuierlich betriebenen Reaktionsstufe metallisches Siliziumpulver zu 25 Gew.-% bis 35 Gew.-%, bezogen auf das Reaktionsgemisch, enthalten ist.

## Claims

1. A continuous process for preparing chlorine-free tetraalkoxysilanes of the formula (I)
(R¹O)₄Si (I) (I)
where R¹ are each, independently of one another, an unbranched, branched and/or cyclic hydrocarbon radical having from 1 to 6 carbon atoms, by reacting metallic silicon powder with a monohydric alcohol in the presence of a basic catalyst, wherein the catalyst which is a mixture of
(a) at least one compound of the formula (II)
[R²O-(R³O)ₘ]ₙSi[OR¹]₄₋ₙ (II),
(b) at least one compound of the formula (III)
R²O-(R³O)ₘ-M (III)
and
(c) at least one compound of the formula (IV)
R²O-(R³O)ₘ-H (IV),
where R¹ is as defined above, R² are each, independently of one another, a hydrocarbon radical having from 1 to 10 carbon atoms or hydrogen, R³ are each, independently of one another, a hydrocarbon radical having from 1 to 4 carbon atoms and M is an alkali metal selected from among lithium, sodium and potassium and m is from 0 to 20 and n is from 0 to 4,
is initially charged in a continuously operated reaction stage, metallic silicon powder and alcohol are then metered in continuously at elevated temperature, the reaction mixture is subsequently separated in a first column, with gaseous hydrogen being discharged via the top, high-boiling catalyst being recirculated to the reaction mixture and low-boiling components being passed to a second column in which the tetraalkoxysilanes of the formula (I) are separated off and low-boiling alcohol obtained is recirculated to the reaction.

2. A process according to claim 1, **characterized in that** the catalyst is prepared by reacting at least one tetraalkoxysilane of the formula (I)
(R¹O)₄Si (I),
with at least one compound of the formula (IV)
R²O-(R³O)ₘ-H (IV)
and at least one compound of the formula (V)
R¹OM (V),
where R¹, R², R³, M and m are as defined above.

3. A process according to claim 2, **characterized in that** the radical R¹ is a methyl, ethyl and/or propyl radical.

4. A process according to claim 2, **characterized in that** a substituted and/or unsubstituted oligoethylene glycol and/or polyethylene glycol is used as compound of the formula (IV) for preparing the catalyst.

5. A process according to claim 2, **characterized in that** the molar ratio of the compounds used for preparing the catalyst is from 2 to 3 mol of the compound (IV) to from 1 to 2 mol of the compounds (V) to 1 mol of the compound (I).

6. A process according to claim 2, **characterized in that** the preparation of the catalyst is carried out at the boiling point and over a period of at least 60 minutes.

7. A process according to claim 2, **characterized in that** all or some of the alcohol being formed is removed during the preparation of the catalyst.

8. A process according to claim 1, **characterized in that** methanol, ethanol and/or propanol are used as alcohol for the preparation of the tetraalkoxysilanes.

9. A process according to claim 1, **characterized in that** the alcohol is introduced in liquid and/or gaseous form.

10. A process according to claim 1, **characterized in that** finely milled silicon having an average particle size of less than 70 µm is used.

11. A process according to claim 1, **characterized in that** the continuously operated reaction stage is carried out in a single-stage or multistage mixing reactor.

12. A process according to claim 11, **characterized in that** a bubble column equipped with a stirrer is used as a single-stage mixing reactor.

13. A process according to claim 1, **characterized in that** the continuously operated reaction stage is operated in the temperature range from 120°C to 250°C.

14. A process according to claim 1, **characterized in that** the catalyst concentration in the continuously operated reaction stage is from 30% by weight to 95% by weight, based on the reaction mixture.

15. A process according to claim 14, **characterized in that** the catalyst is present in the continuously operated reaction stage in an amount of from 65% by weight to 75% by weight, based on the reaction mixture.

16. A process according to claim 1, **characterized in that** metallic silicon powder is present in the continuously operated reaction stage in an amount of from 5% by weight to 70% by weight, based on the reaction mixture.

17. A process according to claim 16, **characterized in that** metallic silicon powder is present in the continuously operated reaction stage in an amount of from 25% by weight to 35% by weight, based on the reaction mixture.

## Revendications

1. Procédé de production en continu de tétra-alkoxysilanes exempts de chlore, de formule générale :
(R¹ O)₄ Si (I)
dans laquelle R¹ indépendamment l'un de l'autre signifie des restes hydrocarbonés non ramifiés, ramifiés et/ou cycliques ayant de 1 à 6 atomes de carbone :
par mise en réaction de poudre de silicium métallique avec un alcool monofonctionnel en présence d'un catalyseur basique qui représente un mélange à base de :
a) au moins un composé de formula générale II :
[R²O-(R³O)ₘ]ₙ Si[(OR¹)]₄₋ₙ (II)
b) au moins un composé de formule générale III
R²O - (R³O)ₘ - M (III)
et
c) au moins un composé de formule générale IV
R²O - (R³O)ₘ - H (IV)
dans lesquelles R¹ possède la signification indiquée ci-dessus, R² indépendamment l'un de l'autre représente des restes d'hydrocarbure ayant de 1 à 10 atomes de carbone ou de l'hydrogène ;
R³ indépendamment l'un de l'autre représente des restes d'hydrocarbure ayant de 1 à 4 atomes de carbone ;
ainsi que M représente un métal alcalin choisi parmi le lithium, le sodium ou le potassium ; et
m prend une valeur comprise entre 0 et 20 ainsi que n une valeur comprise entre 0 et 4,
le catalyseur étant introduit dans une étape de réaction menée en continu, puis on ajoute par doses à température accrue en continu de silicium en poudre métallique et de l'alcool, ensuite on sépare le mélange réactionnel sur une première colonne dans laquelle l'hydrogène gazeux est évacué par la tête, on ramène le catalyseur à point d'ébullition élevé dans le mélange réactionnel et les fractions à bas point d'ébullition à une seconde colonne, dans laquelle les tétra-alkoxysilanes de formule générale I sont séparés et l'alcool à bas point d'ébullition qui se forme est ramené dans la réaction.

2. Procédé selon la revendication 1,
**caractérisé en ce qu'**
on prépare le catalyseur par réaction d'au moins un tétra-alkoxysilane de formule générale I :
(R¹ O)₄ Si (I)
avec au moins un composé de formule générale IV
R²O - (R³O)ₘ - H (IV)
et avec au moins un composé de formule générale V
R¹O M (IV)
dans lesquelles R¹, R², R³, M et m possèdent la signification Indiquée ci-dessus.

3. Procédé selon la revendication 2,
**caractérisé en ce que**
le reste R¹ est un reste méthyle, éthyle et/ou propyle.

4. Procédé selon la revendication 2,
**caractérisé en ce qu'**
on utilise pour la préparation du catalyseur comme composé de formule générale IV un oligo et/ou polyéthylène-glycol substitué et/ou non substitué.

5. Procédé selon la revendication 2,
**caractérisé en ce que**
pour la préparation du catalyseur le rapport molaire des composés mis en oeuvre est de 2 à 3 mol du composé IV pour 1 à 2 mol des composés V pour 1 mol du composé I.

6. Procédé selon la revendication 2,
**caractérisé en ce que**
la préparation du catalyseur s'effectue à la température d'ébullltion et pendant un laps de temps d'au moins 60 minutes.

7. Procédé selon la revendication 2,
**caractérisé en ce qu'**
on élimine en totalité ou partiellement l'alcool qui se forme pendant la production du catalyseur.

8. Procédé selon la revendication 1,
**caractérisé en ce qu'**
on utilise pour la préparation des tétra-alkoxysilanes comme alcool, du méthanol, de l'éthanol et/ou du propanol.

9. Procédé selon la revendication 1,
**caractérisé en ce qu'**
on ajoute par doses l'alcool sous forme liquide et/ou gazeuse.

10. Procédé selon la revendication 1,
**caractérisé en ce qu'**
on met en oeuvre du silicium finement broyé ayant une taille de grains moyenne inférieure à 70 µm.

11. Procédé selon la revendication 1,
**caractérisé en ce qu'**
on effectue l'étape de réaction menée en continu, dans un réacteur de mélange à un ou à plusieurs étages.

12. Procédé selon la revendication 11,
**caractérisé en ce qu'**
on utilise comme réacteur de mélange à un étage une colonne à bulles équipés d'un agitateur.

13. Procédé selon la revendication 1,
**caractérisé en ce qu'**
on mène l'étape réactionnelle menée en continu dans une plage de température allant de 120 à 250°C.

14. Procédé selon la revendication 1.
**caractérisé en ce que**
dans l'étape réactionnelle menée en continu le catalyseur est présent à 30 % en poids à 95 % en poids - rapporté au mélange réactionnel.

15. Procédé selon la revendication 14,
**caractérisé en ce que**
dans l'étape réactionnelle menée en continu le catalyseur est présent à 65 % en poids à 75 % en poids rapporté au mélange réactionnel.

16. Procédé selon la revendication 1,
**caractérisé en ce que**
dans l'étape réactionnelle menée en continu, du silicium en poudre métallique est présent pour 5 % en poids à 70 % en poids rapporté au mélange réactionnel.

17. Procédé selon la revendication 16,
**caractérisé en ce que**
dans l'étape réactionnelle menée en continu le silicium en poudre métallique est présent pour 25 % en poids à 35 % en poids rapporté au mélange réactionnel.
